# EUROPEAN PATENT SPECIFICATION

(11) **EP 1 537 637 B1**
(45) Date of publication and mention of the grant of the patent: **15.11.2006**
(21) Application number: 02807703.0
(22) Date of filing: 30.08.2002
(51) Int. Cl.: H01S 3/10, H01S 3/08, H01S 3/106

(54) **WAVELENGTH TUNABLE RESONATOR WITH A PRISM**
BEZÜGLICH WELLENLÄNGE ABSTIMMBARER RESONATOR MIT EINEM PRISMA
RESONATEUR REGLABLE EN LONGUEUR D'ONDE EQUIPE D'UN PRISME

(43) Date of publication of application: 08.06.2005
(73) Proprietor: Agilent Technologies, Inc., Palo Alto, CA 94306 (US)
(72) Inventor: SCHWARZ, Jochen, 70567 Stuttgart (DE)
(74) Representative: Neuerburg, Gerhard
(86) International application number: PCT/EP2002/009675
(87) International publication number: WO 2004/021530

(56) References cited:
- US-A- 550 850
- US-A- 6 115 401
- US-B1- 6 282 215
- FAVRE F ET AL: "82 NM OF CONTINUOUS TUNABILITY FOR AN EXTERNAL CAVITY SEMICONDUCTOR LASER" ELECTRONICS LETTERS, IEE STEVENAGE, GB, vol. 27, no. 2, 17 January 1991 (1991-01-17), pages 183-184, XP000201222 ISSN: 0013-5194
- PATENT ABSTRACTS OF JAPAN vol. 012, no. 234 (E-629), 5 July 1988 (1988-07-05) -& JP 63 028091 A (CANON INC), 5 February 1988 (1988-02-05)

## Description

### BACKGROUND OF THE INVENTION

The present invention relates to a wavelength tunable resonator.

Wavelength tunable resonators are acquiring an increasing importance in industry, particularly in optical communication measurement device industry. Typical designs of wavelength tunable cavities are, e.g., provided by Liu, K. & Littmann, G. in "Novel Geometry for Single-Mode Scanning of Tunable Lasers", Optics Letters 6 (3), p.117 - p.118 (1981), or by Xu, G., Fujii, K.-I. & Nakayama, S. in "Experimental Study on a Prism - External - Resonator Semiconductor Laser with Dispersion Feedback", Review of Laser Engineering, Vol. 25, No. 6, p. 431 - p. 433, (1997).

US 5,550,850 discloses a wavelength tunable resonator comprising a first reflector and a second reflector defining a resonator having an optical path with a length, a gain medium for generating and emitting said beam towards said first and second reflector and a rotatable prism, which is arranged within said optical path, whereby the prism is rotated in order to precisely tune the wavelength of the beam.

### SUMMARY OF THE INVENTION

It is an object of the present invention to provide an improved wavelength tunable resonator. The object is solved by the independent claims. Preferred embodiments are provided by the dependent claims.

According to preferred embodiments of the invention a wavelength tunable resonator comprises at least two reflectors, which define the optical path length of a resonator. Both mirrors reflect an incident beam of electromagnetic radiation towards the respective other mirror. As a result of the resonator such defined, resonance modes form out of the electromagnetic radiation of the beam reflected between both mirrors. The wavelength of the respective resonance modes depends on the optical path length of the resonator.

A gain medium is placed within the resonator for amplifying or generating and emitting a beam of electromagnetic radiation into the resonator. The gain medium can be -any light amplifying medium, in particular a semiconductor laser chip.

A prism is arranged within the optical path of the beam reflected between the mirrors. The prism refracts an incident beam depending on an incident angle between the direction of the beam and a normal direction applied to a first surface of the prism. The prism also comprises a second surface, which is inclined with respect to the first surface. The optical path of said beam exits the prism through said second surface towards the second reflector.

It is to be understood, that according to the present invention any substantially transparent device composed of dispersive material and having a first and a second surface, both surfaces being inclined with respect to each other for separating portions of an incident beam into beams of different refraction angles depending on their wavelength, is considered by the term "prism". The first and/or the second surface of the prism may even be curved.

The prism comprises dispersive material, such that the beam exiting the prism, e.g., towards the second reflector has a particular wavelength range, which fulfills the condition of being reflected directly back towards the prism and the first reflector. Portions of the beam having different wavelengths refracted or redirected by the prism not fulfilling this condition will thus leave the resonator. Accordingly, the prism acts as a wavelength filter selecting a comparatively narrow wavelength range.

In order for the resonator to be tunable by wavelength, at least one of the reflectors is provided being moveable for increasing or decreasing the optical path length of the resonator. As a result the wavelengths of the resonance modes forming within the resonator are shifted.

The prism is provided with the feature of rotation, such that the incident angle with respect to the first surface of the prism can be varied. The rotation can be performed about an axis of rotation, which may, e.g. according to an embodiment of the present invention, advantageously extend along a line across the first surface of the prism, whereby said incident beam emitted from the gain medium intersects with the axis of rotation. Thus, the incident beam intersects the surface at a predetermined position irrespective of the incident angle of the beam with respect to the surface, or the actual rotation angle of the prism within the resonator, equivalently.

The effect of rotating the prism with respect to the other optical elements, i.e. the first and second reflectors, etc., is, that the beam exiting the prism through the second surface into the direction of the second reflector experiences a shift of the filter function defining said selected wavelength range. The filtered wavelength range depends on an angle defined by the incident beam reflected by the first reflector and/or emitted by the gain medium towards the prism and a line connecting the prism and the second reflector. The direction of movement of the second reflector is preferably arranged along this line. The advantage arises from the fact, that the only angle, which changes due to a rotation, is the incident angle. Accordingly, the rotation of the prism leads to a shift of the filtered wavelength range, while a movement of the second reflector leads to a tuning of the resonator resonance mode wavelength.

In a preferred, advantageous embodiment of the present invention the prism is connected to a means for rotating the prism, while the second reflector is connected to a means for moving the mirror, both means being connected to a common support. E.g., the means for rotating the prism can be a lever being rigidly connected to the prism and being connected to the support by means of a joint. The means for moving the second reflector can for example as well be mounted to the support. Moving the support then leads to a time coincidence of a rotation of the prism and a movement of the second reflector. Applying suitable dimensions to the lever, the prism can be rotated, such that a resonance mode selected by the filtered wavelength range is actually followed by the shifted filter function when tuning the resonator. In accordance with the present invention a mode-hop free tuning on a large wavelength range scale becomes feasible using a prism as a wavelength filter. Costs can be saved, since just one drive is needed in order to actuate the prism and the second reflector. Moreover, irregularities during the movement of the support act in the same way on the prism and on the second reflector, thus leading to an improved tuning result.

### BRIEF DESCRIPTION OF THE DRAWINGS

Other objects and many of the attendant advantages of the present invention will be readily appreciated and become better understood by reference to the following detailed description when considering in connection with the accompanied drawings. Features that are substantially or functionally equal or similar will be referred to with the same reference sign(s).
- Fig. 1: displays a wavelength tunable resonator according to the present invention in a tuning position selecting a short wavelength resonance mode,
- Fig. 2: displays the same resonator as in fig. 1, but in a position selecting a long wavelength resonance mode,
- Fig. 3: displays a diagram representing the beam deviation for a prism with strong dispersion,
- Fig. 4: displays an embodiment being arranged as a ring resonator.

### DETAILED DESCRIPTION OF EMBODIMENTS OF THE INVENTION

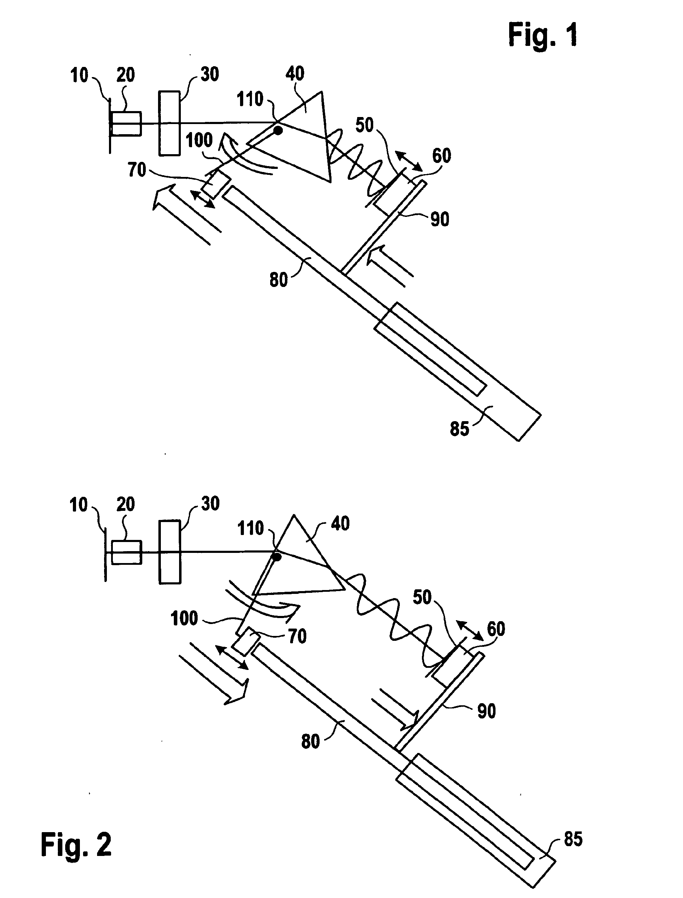

Figure 1 displays a wavelength tunable resonator having a semiconductor laser diode as a gain medium 20, a first reflector 10 and a second reflector 50 according to the present invention. A beam 5 of electromagnetic radiation is generated and emitted by the gain medium 20 and reflected between the first arid second reflectors 10, 50. A resonator lens 30 serves for collimating the beam 5 emitted from the gain medium 20 towards the second reflector 50.

A prism being composed of a photonic crystal is arranged within the optical path of beam 5 refracting the beam transmitted from the resonator lens 30 towards the second reflector 50. The material of the prism 40 has refractive indices in the range 1.5-1.7, thus being highly dispersive.

In the plane of the second reflector 50 a spectrum of the light beam emitted from prism 40 evolves, but only those portions of beam 5 are reflected towards the prism 40, which orthogonally fall towards the surface of the mirror 50. Other portions having different wavelength are not reflected to the prism 40 and thus leave the resonator. In figure 1 a wavelength is selected, which is comparatively short.

The prism 40 can be rotated around an axis of rotation 110 in order to shift the wavelength range that fulfills the condition of orthogonality upon the surface of the second reflector 50. It is to be understood that the same effect arises, when a retroreflector or other mirror-like reflectors are used instead of a plane mirror as the second reflector 50. In particular, the second reflector can be provided with a curved surface.

A lever 100 is connected with the prism 40 for rotating it about the axis of rotation 110.

By means of a joint the lever 100 is connected with one end of a piezo actuator. The piezo actuator 70 is designed to fine-adjust the incident angle of beam 5 with respect to the surface of prism 40, which is orientated towards the resonator lens 30.

The other end of the piezo actuator 70 is connected to a movable support bar 80, which can be shifted and controlled by means of gas cylinder 85. A plate 90 is rigidly connected with support bar 80. The plate 90 mounted with one end of a second piezo actuator 60. The second piezo actuator 60 has another end, which is connected with the second reflector 50 for providing a fine-adjustment of the position of that mirror with respect to the plate position.

The direction of movement of the support bar 80 is parallel to the optical path of the beam 5 between the prism 40 and the second reflector 50. When the support bar 80 is shifted, as can be seen by the arrows in Figs. 1 and 2, a rotation of the prism 40 and a movement of the second reflector 50 are effected. For example, the support bar 80 shift displayed in Fig. 2 increases the optical path length of the resonator resulting in a larger wavelength of a resonance mode under consideration. At the same time the prism 40 rotates such that the incident angle of the beam 5 with respect to the first surface of the prism becomes large.

The length of-the different elements in the resonator and the motion of the prism are chosen, such that the resonator resonance mode is always close to the filter function curve of the prism 40. Using the resonator displayed in Fig. 1 a tuning in the wavelength range 1250 nm - 1600 nm is fostered. In this embodiment the distance between the first reflector 10 and the prism amounts to 1 cm. The optical path within the prism amounts to 0.5 cm. The distance between the prism and the second reflector is variable and amounts to 0.5 cm at a tuned wavelength of 1250 nm and to 1.2 cm at a wavelength of 1600 nm. Accordingly a path difference is realized by a linear motion of the second reflector that amounts to 0.7 cm. The length of the lever 100 is 1.2 cm. A range of 28° of the incident angle is covered by the rotation motion enabled-by a shift of the support bar 80. This results in an almost continuous tuning that can be adjusted for continuous tuning by piezo actuators.

Further embodiments of the present invention relate to one or more of the reflectors being semitransparent for outcoupling of beam portions. In case of the second reflector being semitransparent, a low source spontaneous emission (LSSE) outcoupling of light becomes possible.

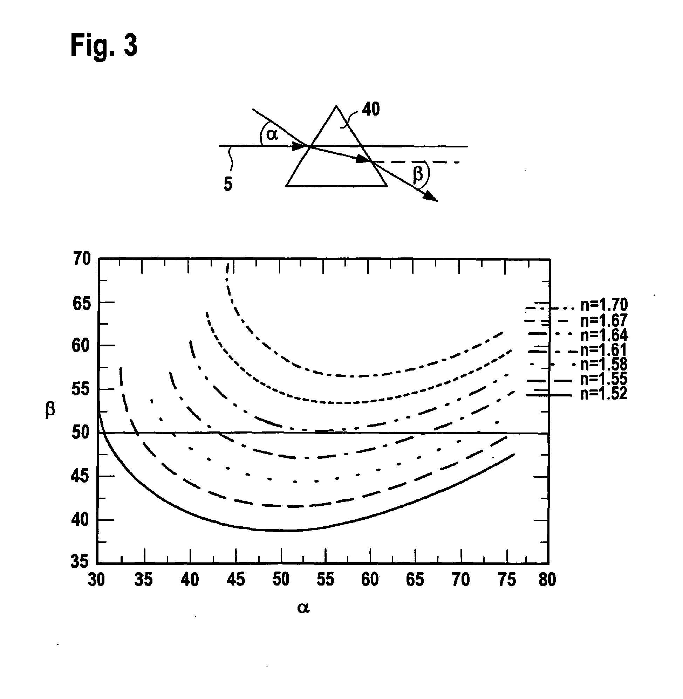

Fig. 3 illustrates the behavior of prisms 40 having different refractive indices n. The diagram shows an angle β that the output beam of the prism towards the second reflector 60 has with an incident beam 5, i.e., the prism deflection angle, as a function of angle α that the incident beam 5 has with a normal of the prism surface. In this embodiment angle β is held constant as is obvious from the embodiments shown Figs. 1 and 2. A value of 50 degrees for β is indicated by a horizontal line in Fig. 3.

As incident angle α is, e.g., increased by the rotation movement according to the preferred embodiments of the invention, the refractive index of a prism 40, which provides the combination of angle α and angle β, approaches a maximum value first and decreases thereafter. A refractive index n of a prism is not easily changed once a prism is manufactured, however, it becomes clear that the varying refractive index n can be interpreted in terms of the varying tuning wavelength.

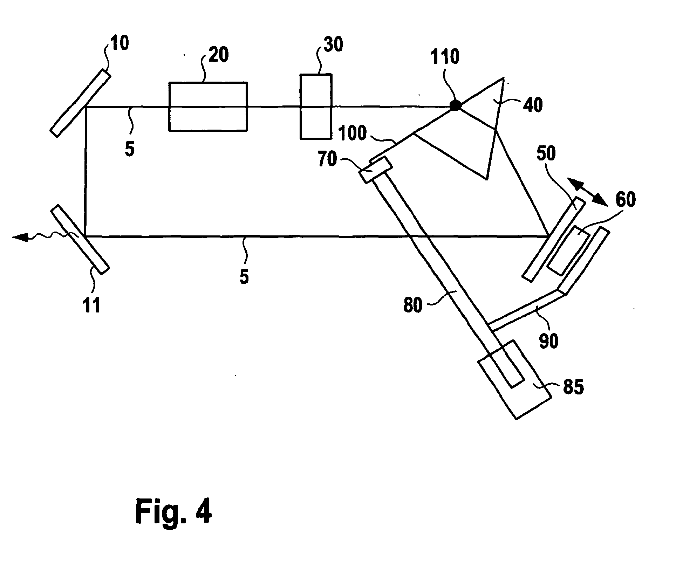

According to a further embodiment of the present invention the reflectors and the prism are arranged within a ring resonator as shown in Fig. 4, wherein the second reflector reflects the beam of electromagnetic radiation towards the first reflector via a second optical path, that does not transmit back through the prism 40. Rather, a third semitransparent reflector 11 is provided to admit beam 5 to be transmitted towards the first reflector. The third semitransparent reflector 11 serves for further outcoupling a portion of beam 5.

The resonator with a prism according to the present invention increases the quality of a resonator tuning process and/or simplifies the designs of wavelength tunable cavities thereby reducing costs and fostering further miniaturization.

## Claims

1. A wavelength tunable resonator comprising:
a first reflector (10) for reflecting a beam (5) of electromagnetic radiation towards a second reflector (50),
said second reflector (50) for reflecting said beam (5) back towards said first reflector (10), said first (10) and second reflector (50) defining a resonator having an optical path with a length,
a gain medium (20) for generating and emitting said beam (5) towards said first (10) and second reflector (50),
a prism (40), which is arranged within said optical path,
**characterized in that**
at least said second reflector (50) is arranged to be movable with respect to other optical elements within said resonator for increasing or decreasing said length of said optical path of said resonator, and
said prism (40) filters a wavelength of said beam (5), wherein said prism (40) is arranged to be rotatable about an axis (110) with respect to said other optical elements within said resonator for adapting said filtered wavelength range to said increase or decrease of said optical path length.

2. The resonator of claim 1,
wherein said gain medium (20) is a laser source comprising said first reflector (10) as a back facet and having a front surface, through which said beam is emitted towards said second reflector (50).

3. The resonator according to claim 1,
wherein said prism (40) and said second reflector (50) are mechanically coupled to a common support, said common support being movable by means of a drive for providing a combined movement of said second reflector and rotation of said prism.

4. The resonator according to claim 3 or any one of the above claims,
further comprising a first actuator for performing a fine-adjustment of said prism with respect to said means for rotating said prism.

5. The resonator according to claim 3 or any one of the above claims,
further comprising a second actuator for performing a fine-adjustment of said second reflector with respect to said means for moving said second reflector.

6. The resonator according to claim 2 or any one of the above claims,
further comprising a resonator lens for collimating said beam emitted from said laser source.

7. The resonator according to claim 4 or any one of the above claims,
wherein at least one of said first or second actuator is a piezo-actuator.

8. The resonator according to claim 1 or any one of the above claims,
wherein said prism (40) comprises a photonic crystal.

9. The resonator according to claim 1 or any one of the above claims,
wherein said prism (40) comprises a surface having an intersection point with said optical path of said incident beam, and
wherein said axis of rotation (110) is arranged along a line upon said surface, said line running through said intersection point on said surface.

10. The resonator according to claim 1 or any one of the above claims,
wherein said prism (40) is designed to direct a portion of said incident beam comprising said filtered wavelength towards said second reflector (50).

## Patentansprüche

1. Resonator mit abstimmbarer Wellenlänge, der Folgendes umfasst:
einen ersten Reflektor (10) zum Reflektieren eines Strahls (5) einer elektromagnetischen Strahlung auf einen zweiten Reflektor (50),
wobei der zweite Reflektor (50) den Strahl (5) zurück auf den ersten Reflektor (10) reflektiert und der erste Reflektor (10) und der zweite Reflektor (50) einen Resonator mit einer optischen Weglänge definieren,
ein Verstärkungsmedium (20) zum Erzeugen und Emittieren des Strahls (5) auf den ersten Reflektor (10) und den zweiten Reflektor (50),
ein Prisma (40), das innerhalb des optischen Weges angeordnet ist,
**dadurch gekennzeichnet, dass**
mindestens der zweite Reflektor (50) so angeordnet ist, dass er in Bezug auf andere optische Elemente im Resonator bewegt werden kann, um die optische Weglänge des Resonators zu vergrößern oder zu verkleinern, und
das Prisma (40) eine Wellenlänge des Strahls (5) filtert, wobei das Prisma (40) so angeordnet ist, dass es um eine Achse (110) in Bezug auf andere optische Elemente im Resonator gedreht werden kann, um den gefilterten Wellenlängenbereich an die Vergrößerung oder Verkleinerung der optischen Weglänge anzupassen.

2. Resonator nach Anspruch 1,
bei welchem das Verstärkungsmedium (20) eine Laserquelle ist, die den ersten Reflektor (10) als Rückfläche umfasst und eine Vorderfläche aufweist, durch die der Strahl auf den zweiten Reflektor (50) emittiert wird.

3. Reflektor nach Anspruch 1, bei welchem das Prisma (40) und der zweite Reflektor (50) mechanisch mit einem gemeinsamen Träger gekoppelt sind und der gemeinsame Träger mit Hilfe eines Antriebs bewegt werden kann, um eine gemeinsame Bewegung des ersten Reflektors in Verbindung mit der Drehung des Prismas zu erzeugen.

4. Resonator nach Anspruch 3 oder einem der obigen Ansprüche,
der ferner ein erstes Stellglied zum Ausführen einer Feinabstimmung des Prismas in Bezug auf das Mittel zum Drehen des Prismas umfasst.

5. Resonator nach Anspruch 3 oder einem der obigen Ansprüche,
der ferner ein zweites Stellglied zum Ausführen einer Feinabstimmung des zweiten Reflektors in Bezug auf das Mittel zum Bewegen des zweiten Reflektors umfasst.

6. Resonator nach Anspruch 2 oder einem der obigen Ansprüche,
der ferner eine Resonatorlinse zur Kollimation des von der Laserquelle emittierten Strahls umfasst.

7. Resonator nach Anspruch 4 oder einem der obigen Ansprüche,
bei welchem das erste und/oder das zweite Stellglied ein Piezo-Stellglied ist.

8. Resonator nach Anspruch 1 oder einem der obigen Ansprüche,
bei welchem das Prisma (40) einen photonischen Kristall umfasst.

9. Resonator nach Anspruch 1 oder einem der obigen Ansprüche,
bei welchem das Prisma (40) eine Oberfläche umfasst, die einen Schnittpunkt mit dem optischen Weg des auftreffenden Strahls aufweist, und
bei welchem die Drehachse (110) entlang einer Linie auf der Oberfläche angeordnet ist und die Linie durch den Schnittpunkt auf der Oberfläche verläuft.

10. Resonator nach Anspruch 1 oder einem der obigen Ansprüche,
bei welchem das Prisma (40) so beschaffen ist, dass es einen Teil des auftreffenden Strahls, der die gefilterte Wellenlänge umfasst, auf den zweiten Reflektor (50) richtet.

## Revendications

1. Résonateur accordable en longueur d'onde comprenant :
un premier réflecteur (10) pour réfléchir un faisceau (5) de rayonnement électromagnétique en direction d'un deuxième réflecteur (50) ;
ledit deuxième réflecteur (50) pour réfléchir ledit faisceau (5) de nouveau en direction dudit premier réflecteur (10), ledit premier réflecteur (10) et ledit deuxième réflecteur (50) définissant un résonateur comportant un chemin optique d'une certaine longueur ;
un milieu amplificateur (20) pour générer et émettre ledit faisceau (5) en direction dudit premier réflecteur (10) et dudit deuxième réflecteur (50) ;
un prisme (40), qui est disposé dans ledit chemin optique ;
**caractérisé en ce que**
ledit deuxième réflecteur (50) au moins peut être déplacé par rapport à d'autres éléments optiques à l'intérieur dudit résonateur pour augmenter ou réduire ladite longueur dudit chemin optique dudit résonateur, et
ledit prisme (40) filtre une longueur d'onde dudit faisceau (5), dans lequel ledit prisme (40) peut tourner autour d'un axe (110) par rapport auxdits autres éléments optiques à l'intérieur dudit résonateur pour adapter ladite gamme de longueurs d'onde filtrées à ladite augmentation ou réduction de ladite longueur du chemin optique.

2. Résonateur suivant la revendication 1,
dans lequel ledit milieu amplificateur (20) est une source laser comprenant ledit premier réflecteur (10) comme face arrière et comportant une surface avant, à travers laquelle ledit faisceau est émis en direction dudit deuxième réflecteur (50).

3. Résonateur suivant la revendication 1,
dans lequel ledit prisme (40) et ledit deuxième réflecteur (50) sont mécaniquement raccordés à un support commun, ledit support commun pouvant être déplacé au moyen d'un entraînement pour permettre la combinaison d'un déplacement dudit deuxième réflecteur et d'une rotation dudit prisme.

4. Résonateur suivant la revendication 3 ou l'une quelconque des revendications précédentes,
comprenant en outre un premier actionneur pour effectuer un réglage fin dudit prisme par rapport auxdits moyens de rotation dudit prisme.

5. Résonateur suivant la revendication 3 ou l'une quelconque des revendications précédentes,
comprenant en outre un deuxième actionneur pour effectuer un réglage fin dudit deuxième réflecteur par rapport auxdits moyens de déplacement dudit deuxième réflecteur.

6. Résonateur suivant la revendication 2 ou l'une quelconque des revendications précédentes,
comprenant en outre une lentille de résonateur pour collimater ledit faisceau émis à partir de ladite source laser.

7. Résonateur suivant la revendication 4 ou l'une quelconque des revendications précédentes,
dans lequel un au moins desdits premier et deuxième actionneurs est un actionneur piézoélectrique.

8. Résonateur suivant la revendication 1 ou l'une quelconque des revendications précédentes,
dans lequel ledit prisme (40) comprend un cristal photonique.

9. Résonateur suivant la revendication 1 ou l'une quelconque des revendications précédentes,
dans lequel ledit prisme (40) comprend une surface comportant un point d'intersection avec ledit chemin optique dudit faisceau incident, et
dans lequel ledit axe de rotation (110) est disposé le long d'une ligne sur ladite surface, ladite ligne passant par ledit point d'intersection sur ladite surface.

10. Résonateur suivant la revendication 1 ou l'une quelconque des revendications précédentes,
dans lequel ledit prisme (40) est conçu pour diriger une partie dudit faisceau incident comprenant ladite longueur d'onde filtrée en direction dudit deuxième réflecteur (50).
